# EUROPÄISCHE PATENTSCHRIFT

(11) **EP 0 679 920 B1**
(45) Veröffentlichungstag und Bekanntmachung des Hinweises auf die Patenterteilung: **01.03.2000**
(21) Anmeldenummer: 95106184.5
(22) Anmeldetag: 26.04.1995
(51) Int. Cl.: G02C 5/22

(54) **Schweissbares Federscharnier**
Weldable resilient hinge
Charnière élastique soudable

(30) Priorität: 30.04.1994 DE 4415308
(43) Veröffentlichungstag der Anmeldung: 02.11.1995
(73) Patentinhaber: OBE-Werk Ohnmacht & Baumgärtner GmbH & Co. KG, 75228 Ispringen (DE)
(72) Erfinder:
(74) Vertreter: Gleiss, Alf-Olav, Dr.jur. Dipl.-Ing.

(56) Entgegenhaltungen:
- EP-A- 0 426 947
- EP-A- 0 628 846
- EP-A- 0 639 785
- DE-A- 2 126 898
- DE-A- 2 835 105
- DE-U- 9 000 055
- FR-A- 2 366 592
- US-A- 5 018 242

## Beschreibung

Die Erfindung betrifft ein Federscharnier für Brillen gemäß Oberbegriff des Anspruchs 1.

Federscharniere der hier angesprochenen Art werden bei Brillen verwendet, deren Bügel aus einer eingeklappten Ruhestellung in eine ausgeklappte Trage-stellung bringbar und auch über diese Stellung hinaus verlagerbar sind. Durch das Federscharnier wird der Bügel gegen den Kopf des Brillenträgers gedrückt, so daß die Brille sicher gehalten wird.

Das Federscharnier weist ein Federelement auf, das in einem Gehäuse untergebracht ist. Dieses wird in der Regel auf den Bügel der Brille festgelötet, wobei so hohe Temperaturen auftreten, daß dabei das Federelement vom Gehäuse getrennt sein muß. Es bedarf also, nach dem Aufbringen des Gehäuses, eines separaten Montageschritts, bei dem das Scharnier- und Federelement in das Gehäuse eingebracht werden. Dies ist sehr aufwendig und kostenintensiv.

Aus der DE 90 00 055 U1 ist ein Federscharnier für Brillen bekannt. Es weist ein Gehäuse auf, das durch Herausarbeiten einer Ausnehmung aus dem Brillenbügel gebildet ist. Das Gehäuse nimmt ein Scharnierelement auf, welches mit einem Federelement zusammenwirkt. Das Scharnierelement ist innerhalb eines Ringes verschieblich geführt, wobei der Ring zur Verankerung des Scharnierelements innerhalb der am Brillenbügel vorgesehenen Ausnehmung wirkt. Das Federelement stützt sich mit seinem einen Ende an einem Widerlager ab, das durch den Ring gebildet ist. Nachteilig bei diesem bekannten Federscharnier ist, daß die Montage aufwendig und damit kostenintensiv ist, da eine vormontierte Baugruppe, die das Scharnierelement und das Federelement umfaßt, in das Gehäuse, also in den Brillenbügel, eingebracht werden muß. Angesichts der sehr kleinen Abmessungen eines derartigen Gehäuses ist es nicht einfach, diese Baugruppe in das Gehäuse einzubringen.

Aus der EP 0 426 947 A2 ist ein Federscharnier für Brillen bekannt, welches ein Gehäuse aufweist, in dem ein Scharnierelement mit einem Federelement angeordnet ist. Das Gehäuse wird an seiner Unterseite mit dem Brillenbügel durch Löten verbunden. Nachdem das Gehäuse und der Brillenbügel miteinander verlötet sind, werden das Scharnierelement und das Federelement in das Gehäuse eingesteckt. Nachteilig bei diesem bekannten Federscharnier ist, daß das Zusammensetzen schwierig ist, da die relativ kleinen Bauteile in das Gehäuse eingebracht werden müssen. Außerdem kann bei diesem Federscharnier das ästhetische Bild durch Austreten des Lötmittels stark beeinträchtigt sein.

Durch die FR 2 366 592 A ist ein Federscharnier bekannt geworden, das ein Gehäuse besitzt, in das bei der Montage ein mäanderförmiges Federelement eingelegt wird. Anschließend wird ein Scharnierelement in Anlage zu dem freien Ende des Federelements gebracht. Danach wird das Gehäuse verschlossen. Aus dieser FR 2 366 592 A ist es auch bekannt, das Federelement und das Scharnierelement durch eine kleine Öffnung in ein vorgefertigtes Gehäuse einzubringen.

In der US 5,018,242 A ist ein Federscharnier beschrieben, welches ein Scharnierelement aufweist, das mit einem Federelement zusammenwirkt. Diese beiden Teile werden als vormontierte Baugruppe in ein Gehäuse eingebracht, das mit einem Brillenbügel verbunden beziehungsweise durch eine Ausnehmung am Brillenbügel gebildet ist. Auch hier ist die vormontierte Baugruppe durch eine winzige Öffnung in das Gehäuse einzubringen. Es hat sich auch hier gezeigt, daß diese präzise Arbeit sehr zeitaufwendig und damit kostenintensiv ist.

Es ist daher Aufgabe der Erfindung, ein Federscharnier der eingangs genannten Art zu schaffen, das sich dadurch auszeichnet, daß die Montage wesentlich vereinfacht ist.

Diese Aufgabe wird mittels eines Federscharniers gelöst, das die in Anspruch 1 genannten Merkmale aufweist. Insbesondere dadurch, daß das Gehäuse mit als Schweißwarzen dienenden Vorsprüngen versehen ist, kann auf Lötverfahren verzichtet werden, so daß eine Beeinträchtigung des fertigen Produkts durch ausgetretene Lötmittel ausgeschlossen ist. Außerdem ist das Gehäuse des erfindungsgemäßen Federscharniers so ausgebildet, daß bei der Montage des Gehäuses auf einen Brillenbügel dünne Wandbereiche nicht übermäßig erwärmt werden, da das Gehäuse im Bereich der Schweißwarzen eine höhere Wandstärke aufweist. Somit können die beim Elektroschweißen auftretenden Stromstärken optimal in die Schweißwarzen eingeleitet werden, so daß diese schmelzen und das Gehäuse an dem Brillenbügel sicher gehalten ist. Die übrigen Wandbereich des Gehäuses bleiben im wesentlichen unversehrt. Der Schweißvorgang ist so schnell durchführbar, daß eine übermäßige Erwärmung der in das Gehäuse eingebrachten Elemente, insbesondere des Federelements, nicht zu befürchten ist. Dadurch, daß das Widerlager für das Federelement durch einen Wandabschnitt des Gehäuses gebildet wird, nämlich durch einen Wandabschnitt größerer Wandstärke, kann dieser Wandabschnitt der Durchführung des Schweißstromes dienen. Als besonders vorteilhaft hat sich herausgestellt, daß die vormontierbare Montageeinheit aus Gehäuse, Scharnierelement und Federelement, leicht in einem Elektroschweißverfahren auf den Brillenbügel aufgebracht werden kann. Da das Widerlager am Gehäuse und das Federelement so miteinander wirken, daß dieses beim Einbringen in das Gehäuse einer Vorspannung unterworfen wird, wird dieses sicher im Gehäuse gehalten, so daß beim Zusammensetzen des Federscharniers die vormontierte Baugruppe nur noch auf den Brillenbügel aufzuschweißen ist, also weitere diffizile Montageschritte entfallen. Außerdem ist noch vorteilhaft, daß das Elektroschweißen einerseits einfach durchführbar ist und andererseits kann auf die beim bekannten Löten erforderlichen Hilfsmittel verzichtet werden, so daß Reinigungsschritte nach dem Aufbringen des Gehäuses auf den Brillenbügel entfallen.

Nach einer Weiterbildung der Erfindung ist vorgesehen, daß das Widerlager gleichzeitig einen Verschluß bildet, so daß auf herkömmliche Verschlußteile verzichtet werden kann.

Weitere Ausgestaltungen ergeben sich aus den übrigen Unteransprüchen.

Die Erfindung wird im folgenden anhand der Zeichnungen näher erläutert. Es zeigen:
- Figur 1: zeigt ein Federscharnier in Unteransicht vor der Montage auf einen Brillenteil;
- Figur 2: zeigt einen schematischen Querschnitt durch ein auf einem Brillenbügel aufgebrachtes Federscharnier;
- Figur 3: zeigt ein Federscharnier gemäß Figur 2 in Draufsicht;
- Figur 4: zeigt ein weiteres Ausführungsbeispiel eines Federscharniers im Längsschnitt und
- Figur 5: zeigt ein Scharnierelement eines Federscharniers.

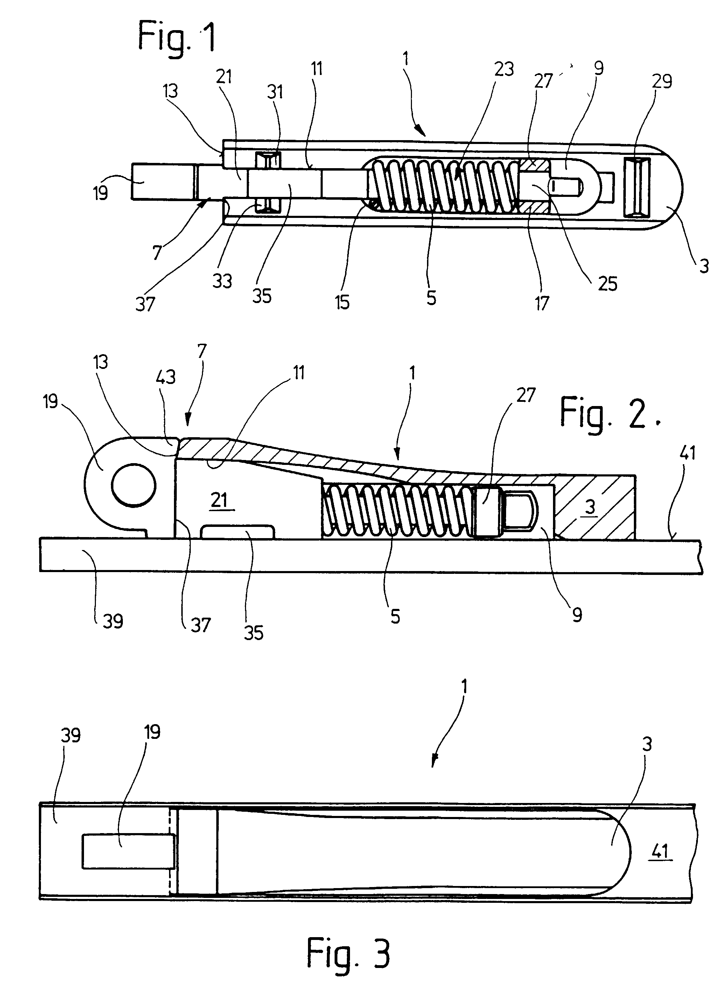

Das in Figur 1 dargestellte Federscharnier 1 weist ein Gehäuse 3 auf, in das ein mit einem Federelement 5 versehenes Scharnierelement 7 eingesetzt ist. Die Unteransicht des Gehäuses 3 zeigt, daß dieses mit einer Ausnehmung 9 versehen ist, die sich -in Figur 1- nach links in einer Durchführung 11 fortsetzt. Letztere durchbricht die linke Stirnwand 13 des Gehäuses 3. Die Breite der Ausnehmung 9 ist größer als die der Durchführung 11. Da die Breite des Federelements 5 an die Breite der Ausnehmung 9 angepaßt ist, ergibt sich im Übergangsbereich zwischen Ausnehmung 9 und Durchführung 11 ein Widerlager 15, gegen das das Federelement 5 anschlägt. Das Widerlager 15 dient als erste Anlageschulter des Federelements 5, das auf der dem Widerlager 15 gegenüberliegenden Seite an einer zweiten Anlageschulter 17 anliegt. Der Abstand zwischen dem Widerlager 15 und der zweiten Anlageschulter 17 ist so gewählt, daß das Federelement 5 im eingebauten Zustand einer Vorspannung unterworfen ist. Durch die Vorspannung werden die in das Gehäuse 3 eingebrachten Teile sicher gehalten. Auf ein herkömmliches Verschlußteil zur Halterung der Teile kann ohne weiteres verzichtet werden, so daß die Montage des Federscharniers deutlich vereinfacht wird. Dies führt zu einer Kostenersparnis, die auch dadurch gegeben ist, daß die Anzahl der zur Herstellung des Federscharniers 1 erforderlichen Teile reduziert ist.

Das Scharnierelement 7 ist im Inneren des Gehäuses 3 in Längsrichtung des Federscharniers 1 verschiebbar gelagert. Es wird aufgrund des Federelements 5 mit einer -in Figur 1 nach rechts wirkenden- Vorspannkraft beaufschlagt, so daß ein ein Bügel scharnier bildendes Scharnierauge 19 ebenfalls mit einer Vorspannkraft beaufschlagt wird. Das Scharnierelement 7 weist außerdem einen in der Durchführung 11 geführten Führungsabschnitt 21 auf, der in ein Aufnahmeteil 23 für das Federelement 5 übergeht.

Bei dem hier dargestellten Ausführungsbeispiel ist das Federelement 5 als Schraubenfeder ausgebildet, die von einem von dem Führungsabschnitt 21 ausgehenden Stift 25 durchdrungen wird, und dem ein die zweite Anlageschulter 17 bildender Ring 27 aufgeschoben ist. Der Stift 25 durchdringt diesen Ring 27. Das letzte Ende des Stifts 25 ist so verformt, daß der Ring 27 über den verformten, vorzugsweise breitgequetschten Endabschnitt des Stifts 25 nicht herausrutschen kann. Durch diese Verankerung des Rings 27 auf dem Stift 25 ist es möglich, daß die Schraubenfeder des Federelements 5 zwischen dem als zweite Anlageschulter 17 dienenden Ring 27 und dem Widerlager 15, das eine erste Anlageschulter bildet, eine Vorspannung unterworfen wird.

Auf der dem Betrachter zugewandten Unterseite des Federscharniers 1 sind mehrere als Schweißwarzen 29, 31 und 33 dienende Vorsprünge vorgesehen. Der am rechten Ende liegende langgestreckte Vorsprung, der im wesentlichen quer zur Längsrichtung des Federscharniers 1 verläuft, kann in mehrere Schweißwarzen unterteilt sein. Die Schweißwarze 29 befindet sich rechts von der Ausnehmung 9 am Gehäuse 3, das hier eine relativ große Wandstärke aufweist. Die Schweißwarzen 31 und 33 sind unmittelbar neben der Durchführung 11 angeordnet, deren Breite geringer gewählt wurde, als diese der Ausnehmung 9, so daß auch hier eine größere Wandstärke als neben der Ausnehmung 9 gegeben ist und das oben angesprochene Widerlager 15 für das Federelement 5 ausgebildet wird.

Das so ausgebildete Gehäuse 3 ist besonders gut für ein Elektro-Schweißverfahren beziehungsweise ein Punkt-Schweißverfahren geeignet, bei dem ein so hoher Strom durch das Gehäuse 3 geleitet wird, daß die auf einem metallischen Bügel aufliegenden Schweißwarzen 29, 31 und 33 sehr stark erwärmt werden und ein Verschweißen des Gehäuses 3 mit einem zugehörigen Bügel erfolgt.

Im Bereich der Schweißwarzen 31 und 33 kann der Führungsabschnitt 21 mit einer vorzugsweise als quer zu dessen Längerstreckung verlaufenden, als Nut 35 ausgebildeten Ausnehmung versehen sein, in die bei dem Schweißvorgang austretendes Material der Schweißwarzen 31 und 33 eintreten kann, ohne daß die Beweglichkeit des Führungsabschnitts 21 beziehungsweise des Scharnierelements 7 im Gehäuse 3 eingeschränkt wäre.

Die Unteransicht zeigt, daß das Scharnierelement 7 im Bereich des Scharnierauges 19 breiter ausgebildet ist, als der Führungsabschnitt 21 beziehungsweise die Durchführung 11, so daß eine Schulter 37 ausgebildet wird, mit der das Scharnierelement 7 an der Stirnwand 13 anliegt. Insofern wird also die Beweglichkeit des Scharnierelements 7 im Gehäuse 3 eingeschränkt, andererseits wird das Scharnierelement 7 sicher im Gehäuse 3 gehalten, so daß das Federscharnier 1 eine Montageeinheit bildet, die ohne die Gefahr des Herausfallens des Scharnierelements 7 aus dem Gehäuse 3 gehandhabt werden kann. Insbesondere kann das Federscharnier 1 in einem ersten Verfahrensschritt vormontiert und später in einem weiteren, separaten Schritt auf einen Brillenbügel aufgebracht, vorzugsweise aufgeschweißt werden.

Figur 2 zeigt das in Figur 1 dargestellte Federscharnier 1 im Längsschnitt. Bei dieser Wiedergabe ist das Federscharnier 1 auf ein Brillenelement, hier auf einen Brillenbügel 39 aufgeschweißt. Das Gehäuse 3 liegt flächig auf der Oberfläche 41 des Brillenbügels 39 an.

Bei der Darstellung gemäß Figur 2 ist das Gehäuse 3 im Längsschnitt gezeigt, das Scharnierelement 7 und das Federelement 5 in Seitenansicht. Es ist erkennbar, daß die Höhe des Führungsabschnitts 21 an die Tiefe der Durchführung 11 angepaßt ist, so daß der Führungsabschnitt 21 oben an der oberen Begrenzungswand der Durchführung 11 geführt ist und andererseits mit seiner Unterseite auf der Oberfläche 41 des Brillenbügels 39. Bei dieser Darstellung wird die in die Unterseite des Führungsabschnitts 21 eingebrachte Nut 35 deutlich erkennbar.

Zur Verbesserung der Führung des Scharnierelements 7 im Inneren des Gehäuses 3 kann die Höhe des Federelements 5 ebenfalls an die Höhe beziehungsweise Tiefe der Ausnehmung 9 angepaßt sein. Dasselbe gilt für den als Anlageschulter 17 dienender Ring 27, dessen Durchmesser so gewählt ist, daß einerseits auf der Oberfläche 41 des Brillenbügels 39 und andererseits an der Oberseite der Ausnehmung 9 eine Führung gewährleistet ist. Es sei hier noch darauf hingewiesen, daß die Breite des Führungsabschnitts 21 an die Breite der Durchführung 11 und die Breite des Federelements 5 sowie der Anlageschulter 17, beziehungsweise des Rings 27 an die Breite der Ausnehmung 9 angepaßt sind, so daß eine optimale Führung des Scharnierelements 7 im Inneren des Gehäuses 3 sichergestellt ist.

Figur 2 läßt noch erkennen, daß die Stirnseite 13 des Gehäuses 3 oben etwas zurückspringt, während das Scharnierauge 19, das im übrigen mit seiner Schulter 37 flächig an der Stirnseite 13 anliegt, eine Nase 43 ausbildet, die der zusätzlichen Sicherung des Scharnierelements 7 nach dessen Einbringung in das Gehäuse 3 dient. Das Scharnierelement 7 wird also nicht nur durch Reibungskräfte sondern auch durch Formschluß im Gehäuse 3 gehalten. Dadurch, daß das Scharnierauge 19 aufgrund des Federelements 5 gegen die Stirnseite 13 des Gehäuses 3 gepreßt wird, wird dessen Inneres, also die Durchführung 11 und auch die Ausnehmung 9 vor Verschmutzungen geschützt.

Figur 3 zeigt das in den Figuren 1 und 2 wiedergegebene Federscharnier 1 in Draufsicht. Gleiche Teile sind mit gleichen Bezugsziffern versehen, so daß auf die Beschreibung zu den vorangegangenen Figuren verwiesen werden kann. Es ist ohne weiteres ersichtlich, daß das Gehäuse 3 auf seiner Oberseite gänzlich geschlossen ist, was im übrigen auch für die übrigen Seitenwände gilt.

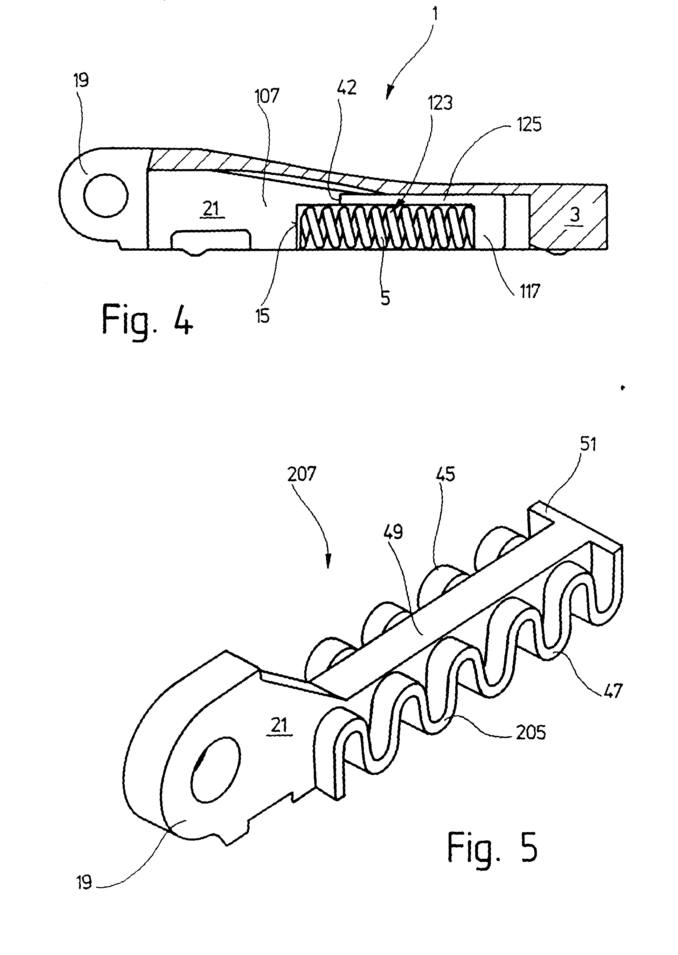

In der Darstellung gemäß Figur 4 ist das Federscharnier 1 wiederum im Längsschnitt gezeigt, allerdings vor dem Verschweißen mit einem Bügel. Teile die mit Vorangegangenem übereinstimmen, sind mit gleichen Bezugsziffern versehen. Insofern wird auf die obige Beschreibung verwiesen.

Das Aufnahmeteil 123 für das Federelement 5 ist hier einstückig ausgebildet: Der Führungsabschnitt 21 setzt sich in einem Aufnahmebügel 125 fort, der in einer Anlageschulter 117 endet. An dieser liegt das hier als Schraubenfeder ausgebildete Federelement 5 mit seiner einen Seite an. Es stützt sich andererseits an einem Widerlager 15 ab, das von dem Führungsabschnitt 21 gebildet wird. Der Abstand zwischen dem Widerlager 15 und der Anlageschulter 117 ist kleiner gewählt als die maximale Ausdehnung des unbelasteten Federelements 5. Dieses wird also beim Einbringen zwischen das Widerlager 15 und die Anlageschulter 117 einer Vorspannung unterworfen, so daß es aufgrund von Reibungskräften im Aufnahmeteil 123 gehalten wird. Es ist zusätzlich möglich, die Anlageflächen für das Federelement 5 mit Vorsprüngen zu versehen, die mit diesem einen Formschluß bilden. Insbesondere wenn das Federelement 5 als Schraubenfeder ausgebildet ist, können die Vorsprünge leicht in das Innere dieser Feder eingreifen und für einen sicheren Halt im Aufnahmeteil 123 sorgen.

Es zeigt sich ohne weiteres, daß der Aufbau des Scharnierelements 107 sehr vorteilhaft ist, da das Federelement 5 einfach in das Aufnahmeteil 123 eingeklipst werden kann. Das Scharnierelement 107 kann sowohl das Scharnierauge 19, als auch den Führungsabschnitt 21 und das Aufnahmeteil 123 aufweisen und einstückig ausgebildet sein, so daß dessen Herstellung sehr preiswert möglich ist.

Figur 4 läßt noch erkennen, daß die Breite des Aufnahmebügels 125 über dessen Länge nicht konstant ist. Es kann hier ein Vorsprung 42 ausgebildet werden, der den Verschiebungsweg des Scharnierelements 7 im Inneren des Gehäuses 3 begrenzt, in dem dieser gegen einen entsprechenden Vorsprung im Inneren des Gehäuses 3 anschlägt.

Bei dem Scharnierelement 107 ist die Breite des Führungsabschnitts 21 auch in dem Bereich des Aufnahmebügels 125 gewählt, der sich an den Führungsabschnitt 21 anschließt. Erst nach Erreichen des Vorsprungs 42 wird die Breite des Aufnahmebügels 125 größer gewählt, als im Bereich des Führungsabschnitts 21. Der Vorsprung 42 ist -in axialer Richtung des Federscharniers 1 gesehen- gegenüber dem Widerlager 15 nach rechts verschoben.

Figur 5 zeigt schließlich ein weiteres Ausführungsbeispiel eines Scharnierelements 207, das sich dadurch auszeichnet, daß das Scharnierauge 19, der Führungsabschnitt 21 und das Federelement 205 einstückig ausgebildet sind.

Das Federelement 205 weist hier zwei als Mäander ausgebildete Federabschnitte 45 und 47 auf, die neben einem Fortsatz 49 angeordnet sind, der sich vom Führungsabschnitt 21 bis zu einer Stirnplatte 51 erstreckt, an der die Federabschnitte 45 und 47 angebracht sind.

Die gesamte Breite der beiden Federabschnitte 45 und 47 neben dem Fortsatz 49 ist so gewählt, daß das Federelement 205 in die Ausnehmung 9 eines Gehäuses 3 paßt, wie es beispielsweise in Figur 1 dargestellt ist. Die Dicke des Führungsabschnitts 21 ist auch bei dem in Figur 5 dargestellten Ausführungsbeispiel des Scharnierelements 207 so gewählt, daß eine Führung im Bereich einer Durchführung 11 eines Gehäuses 3 (siehe beispielsweise Figur 1) sichergestellt ist.

Insbesondere aus Figur 5 wird ersichtlich, daß es für die Funktion des Federscharniers 1 belanglos ist, wie letztlich das Federelement ausgebildet ist, und wie dieses mit dem Scharnierelement zusammenwirkt. Wesentlich ist, daß das Federelement das Scharnierelement mit einer Druckkraft beaufschlagt, durch das das Scharnierelement in das Innere des Gehäuses 3 hineingezogen wird, aber zumindest über einen vorgebbaren Weg gegen die Kraft des Federelements aus dem Gehäuse 3 herausziehbar ist. Das Scharnierelement muß also in Längsrichtung des Federscharniers verschieblich gelagert sein.

Wesentlich ist außerdem, daß das Federscharnier vor dem Aufbringen auf einem Bügel zu einer Montageeinheit zusammengefügt werden kann, bei der ein Scharnierelement gemeinsam mit einem Federelement in ein Gehäuse einbringbar ist. Anhand des oben Gesagten ist ersichtlich, daß das Scharnier- und Federelement als Baugruppe ausgeführt sein kann, die ihrerseits vormontiert werden kann, wobei das Ausführungsbeispiel gemäß Figur 5 zeigt, daß die beiden Elemente auch einstückig herstellbar sind, die Vormontage der Baugruppe insofern entfallen kann.

Grundsätzlich ist davon auszugehen, daß das Scharnierelement vorzugsweise aus Metall herstellbar ist. Es ist jedoch auch möglich, hier spezielle Kunststoffe einzusetzen, sofern Materialen gewählt werden, die die auftretenden Zugkräfte aufnehmen können.

Das Gehäuse 3 des Federscharniers 1 besteht aus Metall. Die Ausnehmung 9 sowie die Durchführung 11 werden entweder bei der Herstellung des Gehäuses 3 eingeformt, beispielsweise bei einem Gieß- oder Sintervorgang, oder vorzugsweise durch spanabhebende Bearbeitung eingebracht. Breite und Tiefe der Ausnehmung 9 beziehungsweise der Durchführung 11 werden an die einzubringenden Elemente angepaßt.

Insgesamt zeigt sich, daß die Wandstärke des Gehäuses 3 insbesondere im Bereich der als Schweißwarzen 29, 31 und 33 dienenden Vorsprünge wesentlich höher ist, als beispielsweise neben der Ausnehmung 9, insbesondere aber höher ist als bei aus Blech geformten Gehäusen, wie sie bei herkömmlichen Federscharnieren verwendet werden. Aufgrund der höheren Wandstärke des Gehäuses 3 können die beim ElektroSchweißen auftretenden Stromstärken optimal in die Schweißwarzen 29, 31, 33 eingeleitet werden, so daß diese schmelzen und das Gehäuse 3 an einem Bügel 39 sicher halten. Die übrigen Wandbereiche des Gehäuses 3 bleiben unversehrt. Der Schweißvorgang ist so schnell durchführbar, daß eine übermäßige Erwärmung der in das Gehäuse 3 eingebrachten Elemente, insbesondere des Federelements nicht zu befürchten ist. Dadurch kann ein Ausglühen beispielsweise von Schraubenfedern vermieden werden. Dies ist gerade der Grund dafür, daß das Federscharnier der hier beschriebenen Art als Montageeinheit verwendet werden kann, in die bereits das zugehörige Federelement und das Scharnierelement eingebaut sind.

Durch die hier eingesetzte Schweißtechnik ist eine Rationalisierung bei der Herstellung fertiger Federscharniere möglich. Insbesondere können auch nickelfreie Materialien eingesetzt werden, die aufgrund zunehmender Allergien von Brillenträgern bevorzugt eingesetzt werden. Auch ist es möglich, Federscharniere der hier angesprochenen Art aus Titan herzustellen beziehungsweise auf Titan-Bügel aufzubringen.

Das hier beschriebene Federscharnier zeichnet sich insbesondere dadurch aus, daß auf übliche auch als Sperrkörper bezeichnete Verschlüsse für das Gehäuse verzichtet werden kann. Das durch das Gehäuse gebildete Widerlager bildet einen Anschlag für das Federelement und ermöglicht den Verzicht von Verschlußteilen, die sonst bei Federscharnieren der hier angesprochenen Art üblich sind. Die Anzahl der zur Herstellung des Federscharniers erforderlichen Teile ist somit reduziert, so daß -auch durch die einfache Herstellung einer vorgefertigten Montageeinheit- die Herstellungskosten reduziert sind.

## Patentansprüche

1. Federscharnier (1) für Brillen, mit einem in einem Gehäuse (3) angeordneten, mit einem Scharniererelement (7;107;207) zusammenwirkenden Federelement (5;205) und mit einem Widerlager (15), **dadurch gekennzeichnet,** daß das Gehäuse (3) mit als Schweißwarzen (29,31,33) dienenden Vorsprüngen versehen ist, daß das Gehäuse (3) im Bereich der Schweißwarzen (29,31,33) eine höhere Wandstärke aufweist, daß das Widerlager (15) durch einen Wandabschnitt des Gehäuses (3) gebildet wird, nämlich durch einen Wandabschnitt größerer Wandstärke, daß das Widerlager (15) mit dem Federelement (5;205) so zusammenwirkt, daß dieses beim Einbringen in das Gehäuse (3) einer Vorspannung unterworfen und im Gehäuse (3) gehalten wird, und daß das Gehäuse (3) eine vormontierbare Montageeinheit mit dem Scharnierelement (7) und Federelement (5;205) bildet, die auf einen Brillenbügel in einem Elektroschweißverfahren aufbringbar ist.

2. Federscharnier nach Anspruch 1, **dadurch gekennzeichnet,** daß das Widerlager (15) als Verschluß wirkt.

3. Federscharnier nach einem der vorhergehenden Ansprüche, **dadurch gekennzeichnet,** daß das Gehäuse (3) mit einer Ausnehmung (9) für das Federelement (5;205) versehen ist, die sich in einer Durchführung (11) für das Scharnierelement (7;107;207) fortsetzt, wobei die Breite der Ausnehmung (9) größer ist als die der Durchführung (11), so daß das Widerlager (15) für das Federelement (5;205) ausgebildet wird.

4. Federscharnier nach einem der vorhergehenden Ansprüche, **dadurch gekennzeichnet,** daß das Scharnierelement (7,107) mit einem Aufnahmeteil (23;123) für das Federelement (5) versehen ist.

5. Federscharnier nach Anspruch 4, **dadurch gekennzeichnet,** daß das Aufnahmeteil (23;123) zwei Anlageschultern (15;17,117) aufweist, zwischen die das Federelement (5) einspannbar ist.

6. Federscharnier nach Anspruch 4 oder 5, **dadurch gekennzeichnet,** daß das Aufnahmeteil (123) und die Anlageschulter (117) einstückig ausgebildet sind.

7. Federscharnier nach einem der vorhergehenden Ansprüche, **dadurch gekennzeichnet**, daß das Federelement (5) als Schraubenfeder ausgebildet und von dem als Stift ausgebildeten Aufnahmeteil (23) durchdringbar ist.

8. Federscharnier nach einem der vorhergehenden Ansprüche, **dadurch gekennzeichnet,** daß das Federelement (205) als Mäanderfeder ausgebildet ist.

9. Federscharnier nach Anspruch 8, **dadurch gekennzeichnet,** daß das Federelement (205) zwei Federabschnitte (45,47) umfaßt.

10. Federscharnier nach Anspruch 9, **dadurch gekennzeichnet,** daß die Federabschnitte (45,47) neben einem Fortsatz (49) angeordnet sind, wobei ein Federabschnitt (45) auf einer Seite des Fortsatzes (49) und der andere Federabschnitt (47) auf der anderen Seite des Fortsatzes (49) angeordnet ist.

11. Federscharnier nach einem der vorhergehenden Ansprüche, **dadurch gekennzeichnet,** daß das Scharnierelement (207) und das Federelement (205) einstückig ausgebildet sind.

12. Federscharnier nach einem der vorhergehenden Ansprüche, **dadurch gekennzeichnet,** daß ein Führungsabschnitt (21) des Scharnierelements (7) im Bereich der Schweißwarzen (31,33) mit je einer Ausnehmung versehen ist.

13. Federscharnier nach Anspruch 12, **dadurch gekennzeichnet,** daß die Ausnehmung als Nut (35) ausgebildet ist.

14. Federscharnier nach Anspruch 3, **dadurch gekennzeichnet,** daß das Federelement (5;205) zusammen mit dem Scharnierelement als Baugruppe in die Ausnehmung (9) einsetzbar ist, derart, daß das Federelement (5;205) das Scharnierelement (7;107;207) mit einer Kraft beaufschlagt, die zu einem Reib- und/oder Formschluß zwischen Scharnierelement und Gehäuse führt.

## Claims

1. A spring hinge (1) for spectacles, with a spring element (5; 205) arranged in a casing (3) and cooperating with a hinge element (7; 107; 207), and with an abutment (15), **characterized in that** the casing (3) is provided with projections acting as welding studs (29, 31, 33), the casing (3) has a greater wall thickness in the region of the welding studs (29, 31, 33), the abutment (15) is formed by a wall portion of the casing (3), namely by a wall portion of greater wall thickness, the abutment (15) cooperates with the spring element (5; 205) in such a way that when the said spring element (5; 205) is inserted in the casing (3) it is subjected to pre-stressing and is held in the casing (3), and the casing (3) forms an assembly unit with the hinge element (7) and the spring element (5; 205) which can be pre-assembled and which can be attached to a spectacle bow in an electric welding process.

2. A spring hinge according to Claim 1, **characterized in that** the abutment (15) acts as a closure.

3. A spring hinge according to one of the preceding Claims, **characterized in that** the casing (3) is provided with a recess (9) for the spring element (5; 205), which recess (9) is continued in a passage (11) for the hinge element (7; 107; 207), wherein the width of the recess (9) is greater than that of the passage (11), so as to form the abutment (15) for the spring element (5; 205).

4. A spring hinge according to one of the preceding Claims, **characterized in that** the hinge element (7; 107) is provided with a receiving part (23; 123) for the spring element (5).

5. A spring hinge according to Claim 4, **characterized in that** the receiving part (23; 123) is provided with two stop shoulders (15; 17, 117) between which the spring element (5) can be clamped.

6. A spring hinge according to Claim 4 or 5, **characterized in that** the receiving part (123) and the stop shoulder (117) are constructed in one piece.

7. A spring hinge according to one of the preceding Claims, **characterized in that** the spring element (5) is constructed in the form of a helical spring and can be traversed by the receiving part (23) constructed in the form of a pin.

8. A spring hinge according to one of the preceding Claims, **characterized in that** the spring element (205) is constructed in the form of a meander spring.

9. A spring hinge according to Claim 8**, characterized in that** the spring element (205) comprises two spring portions (45, 47).

10. A spring hinge according to Claim 9, **characterized in that** the spring portions (45, 47) are arranged adjacent to an extension (49), wherein one spring portion (45) is arranged on one side of the extension (49) and the other spring portion (47) on the other side of the extension (49).

11. A spring hinge according to one of the preceding Claims, **characterized in that** the hinge element (207) and the spring element (205) are constructed in one piece.

12. A spring hinge according to one of the preceding Claims, **characterized in that** a guide portion (21) of the hinge element (7) is provided with one respective recess in each case in the region of the welding studs (31, 33).

13. A spring hinge according to Claim 12, **characterized in that** the recess is constructed in the form of a groove (35).

14. A spring hinge according to Claim 3, **characterized in that** the spring element (5; 205) together with the hinge element can be inserted as a sub-assembly in the recess (9), in such a way that the spring element (5; 205) acts upon the hinge element (7; 107; 207) with a force which results in a non-positive and/or positive locking between the hinge element and the casing.

## Revendications

1. Charnière élastique (1) pour lunettes, avec un élément élastique (5 ; 205) disposé dans un logement (3) et coopérant avec un élément charnière (7 ; 107 ; 207) et avec une butée (15), caractérisée en ce que le logement (3) est pourvu d'éléments faisant saillie faisant office de bossages de soudage (29, 31, 33), en ce que le logement (3) présente une épaisseur de paroi supérieure dans la zone des bossages de soudage (29, 31, 33), en ce que la butée (15) est formée par un segment de paroi du logement (3), notamment par un segment de paroi d'épaisseur de paroi supérieure, en ce que la butée (15) coopère avec l'élément élastique (5 ; 205) de telle sorte que celui-ci est soumis à une précontrainte lors de l'introduction dans le logement (3) et qu'il est maintenu dans le logement (3), et en ce que le logement (3) forme une unité de montage pré-assemblée avec l'élément charnière (7) et l'élément élastique (5 ; 205), qui peut être installée sur une branche de lunettes dans un procédé d'électrosoudage.

2. Charnière élastique selon la revendication 1, caractérisée en ce que la butée (15) fait office d'élément de fermeture.

3. Charnière élastique selon l'une des revendications précédentes, caractérisée en ce que le logement (3) est pourvu d'un évidement (9) pour l'élément élastique (5 ; 205), qui se prolonge dans un passage (11) pour l'élément charnière (7 ; 107 ; 207), la largeur de l'évidement (9) étant supérieure à celle du passage (11), de telle sorte que la butée (15) soit conçue pour l'élément élastique (5 ; 205).

4. Charnière élastique selon l'une des revendications précédentes, caractérisée en ce que l'élément charnière (7 ; 107) est pourvu d'un élément de réception (23 ; 123) pour l'élément élastique (5).

5. Charnière élastique selon la revendication 4, caractérisée en ce que l'élément de réception (23 ; 123) présente deux épaulements d'appui (15 ; 17, 117) entre lesquels l'élément élastique (5) peut être monté.

6. Charnière élastique selon la revendication 4 ou 5, caractérisée en ce que l'élément de réception (123) et l'épaulement d'appui (117) sont conçus d'un seul tenant.

7. Charnière élastique selon l'une des revendications précédentes, caractérisée en ce que l'élément élastique (5) est conçu sous forme de ressort à boudin et qu'il peut être traversé par l'élément de réception (23) conçu sous forme de goupille.

8. Charnière élastique selon l'une des revendications précédentes, caractérisée en ce que l'élément élastique (205) est conçu sous forme de ressort méandrique.

9. Charnière élastique selon la revendication 8, caractérisée en ce que l'élément élastique (205) comprend deux segments de ressort (45, 47).

10. Charnière élastique selon la revendication 9, caractérisée en ce que les segments de ressort (45, 47) sont disposés à côté d'un prolongement (49), un segment de ressort (45) étant à cet égard placé d'un côté du prolongement (49) et l'autre segment de ressort (47) étant placé de l'autre côté du prolongement (49).

11. Charnière élastique selon l'une des revendications précédentes, caractérisée en ce que l'élément charnière (207) et l'élément élastique (205) sont conçus d'un seul tenant.

12. Charnière élastique selon l'une des revendications précédentes, caractérisée en ce qu'un segment de guidage (21) de l'élément charnière (7) est chaque fois doté d'un évidement dans la zone des bossages de soudage (31, 33).

13. Charnière élastique selon la revendication 12, caractérisée en ce que l'évidement est conçu sous forme d'une rainure (35).

14. Charnière élastique selon la revendication 3, caractérisée en ce que l'élément élastique (5 ; 205) peut être logé dans l'évidement (9) conjointement avec l'élément charnière en tant que groupe structurel, de telle sorte que l'élément élastique (5 ; 205) sollicite l'élément charnière (7 ; 107 ; 207) avec une force qui provoque une liaison par adhésion et/ou par coopération de forme entre l'élément charnière et le logement.
